# EUROPEAN PATENT APPLICATION

(11) **EP 2 219 136 A1**
(43) Date of publication of application: **18.08.2010**
(21) Application number: 10153816.3
(22) Date of filing: 17.02.2010
(51) Int. Cl.: G06K 9/00

(54) **Illuminated fingerprint sensor and method**

(30) Priority: 17.02.2009 US 153251 P; 12.02.2010 US 705464
(71) Applicant: Validity Sensors, Inc., San Jose, CA 95131 (US)
(72) Inventor: Gardner, Lawrence C., San Jose, CA 95131 (US); Blazer, Robert, San Jose, CA 95131 (US)
(74) Representative: Betten & Resch

(57) **Abstract**

A fingerprint sensing device includes a fingerprint sensor and a light source proximate the fingerprint sensor. The light source is capable of providing multiple illumination formats. Each of the multiple illumination formats is associated with an operating status of the fingerprint sensor. The light source is positioned to emit light through the fingerprint sensor.

## Description

### RELATED APPLICATIONS

This application claims the benefit of U.S. Provisional Application No. 61/153,251, filed February 17, 2009, the disclosure of which is incorporated by reference herein.

### BACKGROUND

The invention relates generally to systems and methods for illuminating a fingerprint sensor. In particular, the described systems and methods provide different illumination formats to convey information about the status of the fingerprint sensor.

Fingerprint sensors are becoming more popular in many devices, such as laptop computers, cell phones and other mobile devices, and security systems for the purpose of user authentication and password replacement. To enhance the user experience with devices containing a fingerprint sensor, it may be desirable to provide feedback to the user regarding the status of the fingerprint sensor. For example, if a particular device is waiting for a user authentication via their fingerprint before the device is activated, it is important to communicate this status to the user. Since the device is not yet activated, the device's typical user interface may not be operational or may have limited functionality.

Many existing fingerprint sensors made from silicon (e.g., integrated circuits) cannot be illuminated from behind because light emitted from a light source will not penetrate the thickness of the silicon. These existing fingerprint sensors do not include any type of illumination and do not use light sources to provide feedback to the user regarding the status of the fingerprint sensor. Therefore, it is desirable to provide a system and method for illuminating a fingerprint sensor in a manner that conveys information about the status of the fingerprint sensor to the user.

### SUMMARY OF THE INVENTION

There is provided a fingerprint sensing device or apparatus including a fingerprint sensor and a light source proximate the fingerprint sensor. The light source is capable of providing multiple illumination formats. Each of the multiple illumination formats is associated with an operating status of the fingerprint sensor. The light source is positioned to emit light through the fingerprint sensor. Moreover, there are provided apparatus and methods as defined by the independent claims.

Further non-limiting embodiments are defined by the dependent claims, the drawings and the detailed description.

### BRIEF DESCRIPTION OF THE DRAWINGS

Fig. 1 depicts an embodiment of an illuminated fingerprint sensor.

Figs. 2A-2C depict an example assembly of an illuminated fingerprint sensor.

Fig. 3 depicts an embodiment of an illuminated fingerprint sensor including multiple light sources.

Fig. 4 depicts an embodiment of an illuminated fingerprint sensor including an embedded light source.

Fig. 5 depicts another embodiment of an illuminated fingerprint sensor.

Fig. 6 depicts an example computing device including an illuminated fingerprint sensor.

Figs. 7A and 7B depict cross-sectional views of a portion of an illuminated fingerprint sensor.

Fig. 8 depicts another embodiment of an illuminated fingerprint sensor including multiple light sources.

Fig. 9 is a flow diagram depicting an embodiment of a procedure for illuminating a fingerprint sensor.

Throughout the description, similar reference numbers may be used to identify similar elements.

### DETAILED DESCRIPTION

The systems and methods described herein relate to an illuminated fingerprint sensor. Particular embodiments change the manner in which the fingerprint sensor is illuminated based on the status or operating mode of the fingerprint sensor. For example, the illumination color, brightness, flashing rate, or other illumination characteristics are controlled to convey information about the status or operating mode of the fingerprint sensor. In a particular situation, the manner in which the fingerprint sensor is illuminated indicates whether the fingerprint sensor is ready to read a fingerprint, whether the last fingerprint was properly scanned, or whether the last fingerprint was identified as a valid fingerprint. Various other examples and embodiments of illuminated fingerprint sensors are described herein.

Although certain embodiments discussed herein illuminate the sensing surface of a fingerprint sensor, other embodiments illuminate an area proximate the sensing surface to provide feedback to a user of the fingerprint sensor. Thus, an illuminated fingerprint sensor may not necessarily illuminate the sensing surface of the fingerprint sensor. In particular embodiments, a light source is positioned to emit light through a fingerprint sensor, where the fingerprint sensor is at least partially transparent to light. As used herein, "status", "operating status", "mode" and "operating mode" are used interchangeably.

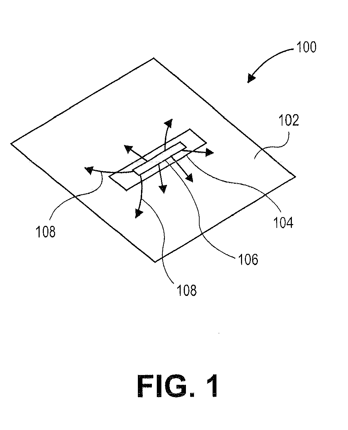

Fig. 1 depicts an embodiment of an illuminated fingerprint sensor 100, which includes a substrate 102, an opening 104 in the substrate, an image sensor 106, and a light source (not shown in Fig. 1) that causes light 108 to be emitted in an area proximate image sensor 106. Substrate 102 may be a printed circuit board, a cover, a housing, or other object to which the fingerprint sensor is coupled. For example, substrate 102 may be a portion of a cellular phone, security panel, computer system, or any other device that utilizes the illuminated fingerprint sensor 100. Opening 104 exposes image sensor 106, thereby allowing a user to access the image sensor. Opening 104 also permits light 108 to be emitted near image sensor 106 to communicate information regarding the state of the fingerprint sensor.

Image sensor 106 receives drive signals from a drive signal generator (not shown), senses fingerprint characteristics as a finger is "swiped" across the image sensor, and delivers sensed fingerprint data to an image sensing module (not shown). In the embodiment of Fig. 1, image sensor 106 is a "swipe" fingerprint sensor. In other embodiments, image sensor 106 is a "static" fingerprint sensor (also referred to as a "placement" fingerprint sensor).

As discussed below, particular embodiments of illuminated fingerprint sensor 100 utilize one or more light sources. The light source used to illuminate the fingerprint sensor may be a light emitting diode (LED) or any other type of light source capable of illuminating the fingerprint sensor as described herein.

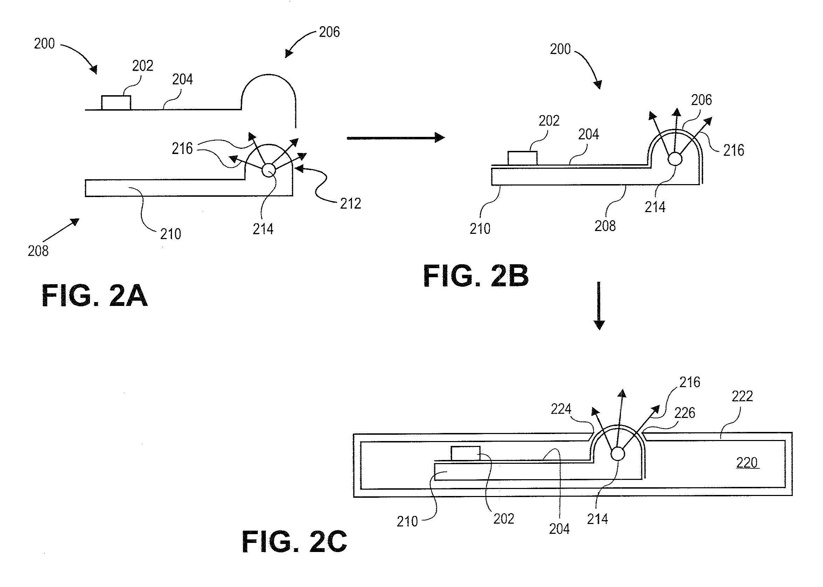

Fig. 2A depicts an example assembly of an illuminated fingerprint sensor 200. Fingerprint sensor 200 includes a sensor portion 206 and an illumination portion 208. Sensor portion 206 is comprised of a substantially flexible substrate 204 with an image sensing module 202 attached thereto. Flexible substrate 204 has a raised (arched) portion at one end that includes an image sensor to sense fingerprint characteristics. In a particular embodiment, flexible substrate 204 is formed using Kapton^{®} polyimide film (available from DuPont). In the embodiment of Fig. 2A, flexible substrate 204 is transparent or semi-transparent such that light is at least partially transmitted through flexible substrate 204.

Illumination portion 208 of illuminated fingerprint sensor 200 includes a rigid substrate 210, a raised portion 212, and a light source 214 that emits light 216 in multiple directions. Rigid substrate 210 can be formed from a variety of compounds, such as fiberglass filled epoxy. Raised portion 212 substantially corresponds in shape and size to the raised portion of sensor portion 206.

Fig. 2B depicts illuminated fingerprint sensor 200 after sensor portion 206 has been mated to illumination portion 208. In this configuration, light source 214 emits light 216 that is fully or partially transmitted through flexible substrate 204 such that the light is visible to a user of illuminated fingerprint sensor 200. Sensor portion 206 may be bonded to illumination portion 208 or otherwise configured such that the sensor portion and the illumination portion remain mated to one another. In particular embodiments, sensor portion 206 is bonded to illumination portion 208 using adhesive bonding, such as double-sided adhesive tape or a bonding glue.

Other embodiments mate sensor portion 206 to illumination portion 208 without bonding the two portions using adhesives or glue. For example, sensor portion 206 can be mated to illumination portion 208 using a mechanical structure, such as a thin wire clip or other mechanism. In another implementation, a portion of the device housing in which illuminated fingerprint sensor 200 is mounted acts to maintain the mated position of sensor portion 206 and illumination portion 208. Alternatively, sensor portion 206 can be configured to wrap around at least part of illumination portion 208 to mate the two portions to one another.

Fig. 2C depicts illuminated fingerprint sensor 200 mounted in a housing 222 or other mounting mechanism. In particular embodiments, housing 222 is associated with a mobile communication device, computing device, security device and the like. Housing 222 includes an opening defined by edges 224 and 226. The assembly shown in Fig. 2B is positioned within housing 222 such that the raised portion of substrate 210 (and the raised portion of flexible substrate 204) aligns with the opening in housing 222. This arrangement allows a user's finger to be swiped across the raised portion of flexible substrate 204, thereby allowing the user's fingerprint characteristics to be sensed by the image sensor. Additionally, this arrangement within housing 222 allows light 216 emitted from light source 214 to travel through the opening in housing 222. Thus, the light emitted from light source 214 is visible to a user of the device in which the illuminated fingerprint sensor 200 is mounted.

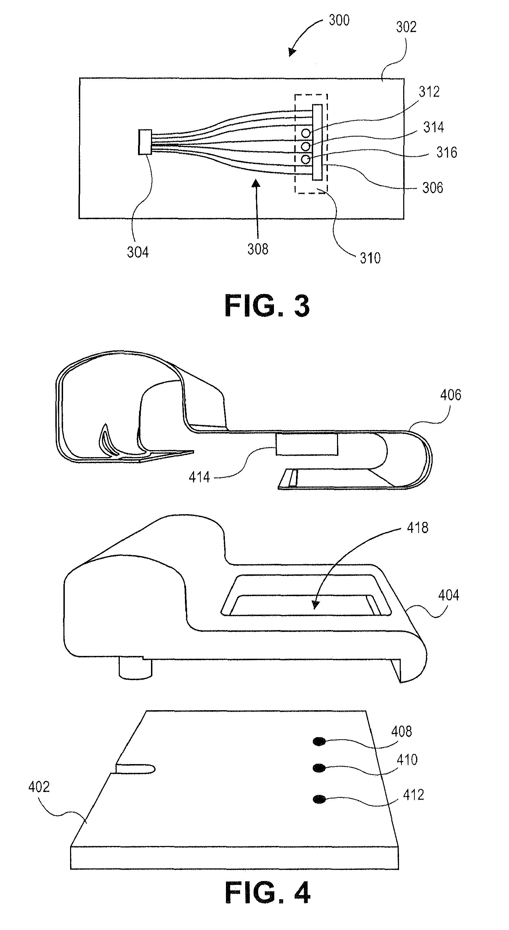

Fig. 3 depicts an embodiment of an illuminated fingerprint sensor 300 including multiple light sources. Illuminated fingerprint sensor 300 may be a swipe fingerprint sensor or a static fingerprint sensor. The embodiment of Fig. 3 includes a substrate 302 having an opening 310 that exposes an image sensor 306 and provides for the emission of light from one or more of three light sources 312, 314 and 316. Illuminated fingerprint sensor 300 also includes an image sensing module 304 coupled to image sensor 306 via multiple communication links 308. Image sensor 306 captures fingerprint information from a user's fingerprint and communicates that information to image sensing module 304. Communication links 308 may be wires, printed circuit board traces, or any other mechanism capable of communicating data between image sensor 306 and image sensing module 304.

Light sources 312, 314 and 316 can be any type of device capable of emitting light that is visible by a user of illuminated fingerprint sensor 300. Light sources 312, 314 and 316 may be the same type of light source or different types of light sources. In a particular embodiment, light sources 312, 314 and 316 are LEDs, each having different colors (e.g., red, green and blue). In another embodiment, light sources 312, 314 and 316 are multi-color LEDs, such that each light source is capable of emitting multiple colors. As discussed herein, the multiple colors and color patterns of the three light sources are used to indicate a status or other information associated with illuminated fingerprint sensor 300. In other embodiments, light sources 312, 314 and 316 may flash in a particular pattern and/or at a particular frequency to indicate a status or other information regarding illuminated fingerprint sensor 300. Although the embodiment of Fig. 3 depicts three light sources 312, 314 and 316, alternate embodiments may include any number of light sources arranged in any manner.

Fig. 4 depicts an embodiment of an illuminated fingerprint sensor 400 including multiple embedded light sources. Illuminated fingerprint sensor 400 may be a swipe fingerprint sensor or a static fingerprint sensor. The embodiment of Fig. 4 includes a substrate 402, a body portion 404 and a sensor portion 406. The "exploded" view of Fig. 4 shows substrate 402, body portion 404 and sensor portion 406 prior to assembly of the three components. In one embodiment, substrate 402 is manufactured from FR4, a glass fiber epoxy laminate commonly used to manufacture printed circuit boards. Body portion 404 is positioned between sensor portion 406 and substrate 402, thereby providing a structure and support for sensor portion 406. Sensor portion 406 captures fingerprint information from a user's fingerprint and communicates that information to an image sensing module 414.

In the embodiment of Fig. 4, multiple light sources 408, 410 and 412 are embedded within substrate 402. Light sources 408, 410 and 412 are positioned such that the light emitted from the light sources is visible to a user of the illuminated fingerprint sensor. In this example, light emitted from light sources 408, 410 and 412 passes through an opening 418 in body portion 404 and is at least partially transmitted through sensor portion 406, such that the light is visible to a user of illuminated fingerprint sensor 400. In a particular implementation, light sources 408, 410 and 412 are LEDs. In other embodiments, one or more of light sources 408, 410 and 412 are disposed on a surface of substrate 402 rather than being embedded within the substrate. Although the embodiment of Fig. 4 depicts three light sources 408, 410 and 412, alternate embodiments may include any number of light sources arranged in any manner.

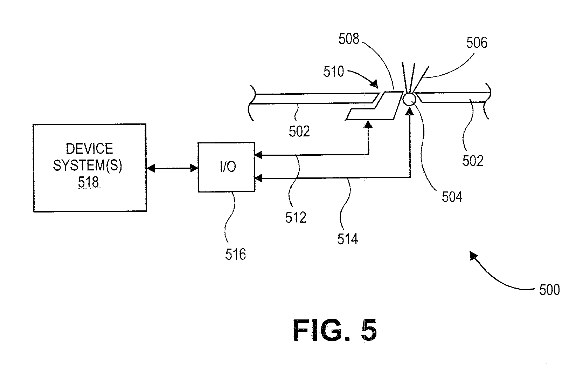

Fig. 5 depicts another embodiment of an illuminated fingerprint sensor 500. Illuminated fingerprint sensor 500 may be a swipe fingerprint sensor or a static fingerprint sensor. The embodiment of Fig. 5 includes a substrate 502 having an opening 510 that provides access to an image sensor 508 and permits the emission of light 506 from a light source 504. In a particular embodiment, substrate 502 is a rigid substrate. Substrate 502 may be a housing or other component of a device, such as a portable communication device, computing device, security system, and the like. Light source 504 can be an LED or any other device capable of emitting light that is visible to the user. A particular embodiment of illuminated fingerprint sensor 500 includes multiple light sources 504 positioned proximate image sensor 508.

Image sensor 508 communicates with an Input/Output (I/O) component 516 via a communication link 512. In a particular embodiment, communication link 512 communicates image data from image sensor 508 to I/O component 516, and communicates control information from I/O component 516 to image sensor 508. I/O component 516 also communicates light control information to one or more light sources 504 via a communication link 514. I/O component 516 communicates data and other information to one or more systems 518 in the device with which illuminated fingerprint sensor 500 is contained. For example, these systems 518 may perform fingerprint verification, control the operating state of illuminated fingerprint sensor 500 (as described herein), and various other functions necessary to operate the device.

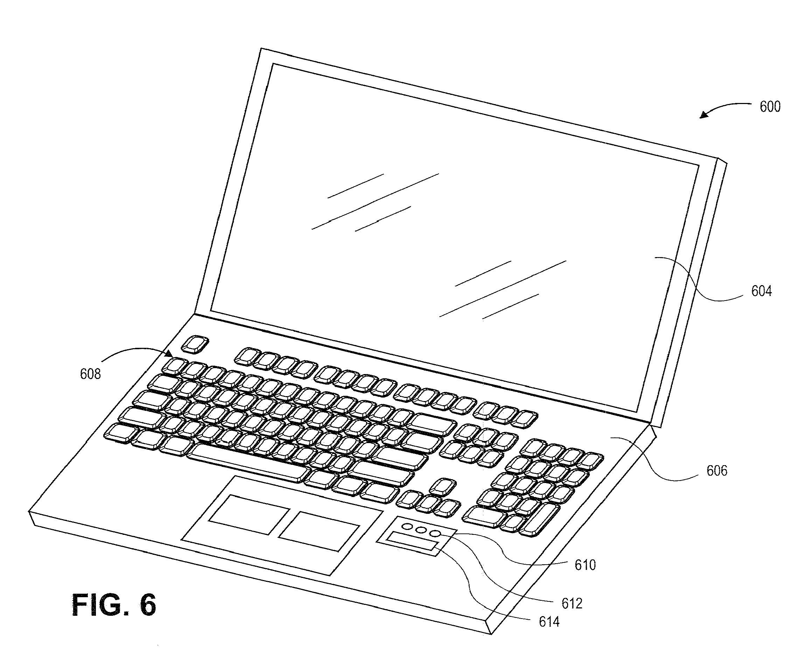

Fig. 6 depicts an example computing device 600 including an illuminated fingerprint sensor. Computing device 600 includes a display screen 604, a housing 606 and a keyboard 608. Computing device 600 also includes an illuminated fingerprint sensor 610 mounted within housing 606 such that the illuminated fingerprint sensor is accessible to a user of computing device 600. Illuminated fingerprint sensor 610 includes three light sources 612 an image sensor 614. Alternate embodiments of illuminated fingerprint sensor 610 may include any number of light sources. Illuminated fingerprint sensor 610 is typically mounted to housing 606 such that the illuminated fingerprint sensor is substantially coplanar with the surface of housing 606 that exposes image sensor 614. Although Fig. 6 illustrates an illuminated fingerprint sensor used with a computing device 600, other devices may utilize a similar installation of an illuminated fingerprint sensor.

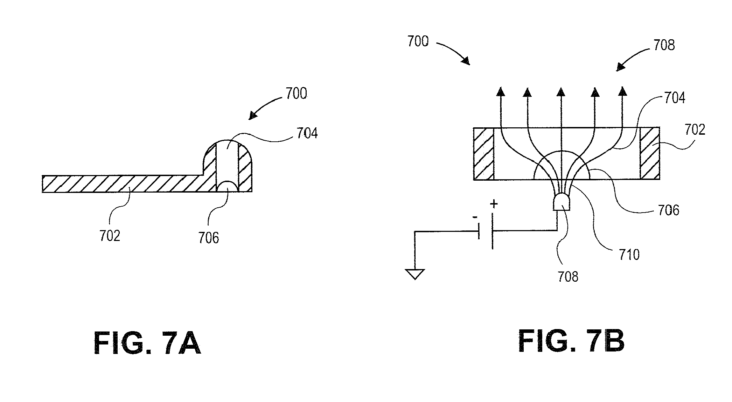

Figs. 7A and 7B depict cross-sectional views of a portion 700 of an illuminated fingerprint sensor. The portion shown in Figs. 7A and 7B is similar to illumination portion 208 shown in Fig. 2A. Fig. 7A illustrates a side cross sectional view of a substrate 702 having a raised portion at the right edge (as oriented in Fig. 7A). The raised portion of substrate 702 includes a clear core 704 and a lens 706. Lens 706 is a concave lens molded into clear core 704. Lens 706 disperses light emitted from a light source evenly across the width of clear core 704. Clear core 704 is formed from a material that evenly transmits light (after the light has been dispersed by lens 706) through the clear core. Example materials for clear core 704 include polycarbonate and acrylic materials.

Fig. 7B illustrates an end cross sectional view of substrate 702 shown in Fig. 7A. In particular, Fig. 7B illustrates the clear core 704 and lens 706 included in the raised portion of substrate 702. A light source 708 is positioned proximate lens 706 such that the light source emits light 710, which passes through lens 706. The emitted light continues through clear core 704 and outwardly from the clear core as indicated by light rays 708. In a particular embodiment, light rays 708 pass through a flexible substrate (not shown) mated to substrate 702 (such as substrate 204 shown in Figs. 2A-2C).

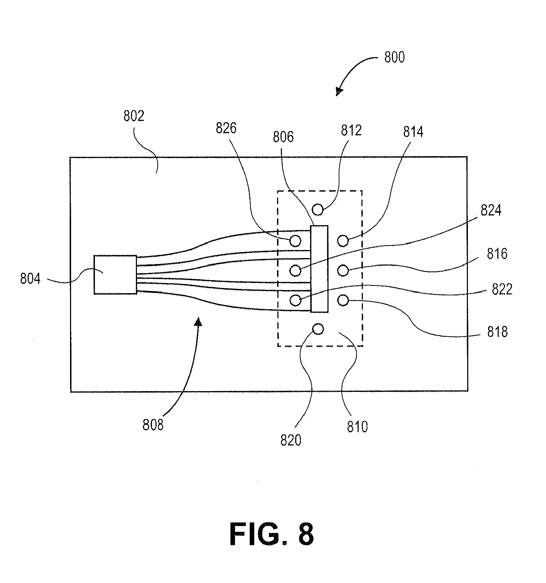

Fig. 8 depicts another embodiment of an illuminated fingerprint sensor 800 including multiple light sources. Illuminated fingerprint sensor 800 may be a swipe fingerprint sensor or a static fingerprint sensor. The embodiment of Fig. 8 includes a substrate 802 having an opening 810 that exposes an image sensor 806 and provides for the emission of light from one or more of multiple light sources 812, 814, 816, 818, 820, 822, 824 and 826. Illuminated fingerprint sensor 800 also includes an image sensing module 804 coupled to image sensor 806 via multiple communication links 808. Image sensor 806 captures fingerprint information from a user's fingerprint and communicates that information to image sensing module 804. Communication links 808 may be wires, printed circuit board traces, or any other mechanism capable of communicating data between image sensing module 804 and image sensor 806.

Light sources 812-826 can be any type of device capable of emitting light that is visible by a user of illuminated fingerprint sensor 800. Light sources 812-826 may be the same type of light source or different types of light sources. In a particular embodiment, light sources 812-826 are LEDs. In a specific implementation, light sources 812-826 are multi-color LEDs, such that each light source is capable of emitting multiple colors. As discussed herein, the multiple colors and color patterns of the multiple light sources are used to indicate a status or other information associated with illuminated fingerprint sensor 800. In other embodiments, light sources 812-826 may flash in a particular pattern and/or at a particular frequency to indicate a status or other information regarding illuminated fingerprint sensor 800. Although the embodiment of Fig. 8 depicts eight light sources 812-826, alternate embodiments may include any number of light sources arranged in any manner. Light sources 812-826 can be mounted on a substrate (such as a printed circuit board or a flexible substrate), embedded within a substrate, mounted on a housing or body portion associated with an illuminated fingerprint sensor, embedded within a housing or body portion associated with an illuminated fingerprint sensor, or mounted or embedded in any other manner that permits the illumination status of one or more of the light sources 812-826 to be visible by a user of the illuminated fingerprint sensor.

In a particular embodiment, multiple light sources are used to illuminate a fingerprint sensor. A portion of the multiple light sources are positioned proximate the fingerprint sensor to illuminate the surface of the fingerprint sensor contacted by the user and to illuminate areas near the fingerprint sensor. A second portion of the multiple light sources are positioned to emit light through the fingerprint sensor. In this embodiment, the fingerprint sensor is at least partially transparent to light. For example, the fingerprint sensor can be manufactured using a substrate that is at least partially transparent to light, such as the flexible substrate discussed herein. Specific implementations of the fingerprint sensor are manufactured from a rigid substrate that is at least partially transparent to light. In particular embodiments, the fingerprint sensor includes conductive lines or conductive traces that are at least partially transparent to light, such as conductive lines manufactured from ITO (Indium tin oxide). ITO is electrically conductive and optically transparent in thin layers. ITO is a mixture of indium oxide and tin oxide. The use of conductive lines that are at least partially transparent to light allows more light to pass through the fingerprint sensor.

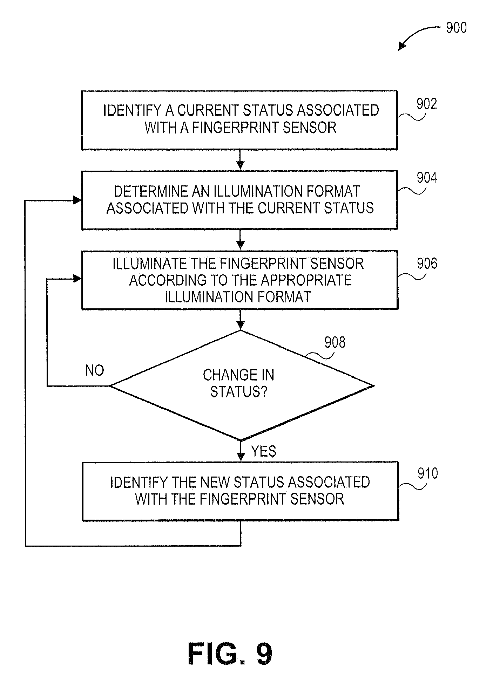

Fig. 9 is a flow diagram depicting an embodiment of a procedure 900 for illuminating a fingerprint sensor. Initially, procedure 900 identifies a current status associated with a fingerprint sensor (block 902). For example, a current status may include information regarding a recent fingerprint scan, such as whether the fingerprint was properly scanned or whether the fingerprint was validated by the device in which the fingerprint sensor is installed. Additionally, the current status may indicate whether the fingerprint sensor is ready to accept a fingerprint swipe by the user.

Procedure 900 continues by determining an illumination format associated with the current status (block 904). The illumination format includes, for example, a color displayed by one or more light sources, flashing of one or more light sources, and the like. The procedure of Fig. 9 continues by illuminating the fingerprint sensor according to the appropriate illumination format (block 906). Illuminating the fingerprint sensor includes activating one or more light sources in the manner defined by the appropriate illumination format.

Next, procedure 900 determines whether a change in status of the fingerprint sensor has occurred (block 908). For example, if the fingerprint sensor was previously unavailable to accept a fingerprint swipe by the user (such as when the device is processing a previous fingerprint swipe), a change in status occurs when the fingerprint sensor becomes available to accept a new fingerprint swipe by a user. If there has been no change in status of the fingerprint sensor, procedure 900 returns to block 906 and continues illuminating the fingerprint sensor using the same illumination format until a change in fingerprint sensor status is detected. If the status of the fingerprint sensor changes, the procedure identifies the new status associated with the fingerprint sensor (block 910) and returns to block 904 to determine an illumination format associated with the new status of the fingerprint sensor.

As mentioned above, the illuminated fingerprint sensor may use different illumination formats based on the current status of the fingerprint sensor. In one embodiment, if a fingerprint swipe by a user is validated, the fingerprint sensor is illuminated using a green color to indicate acceptance of the swiped fingerprint. In that same embodiment, if the fingerprint swipe is not validated, the fingerprint sensor is illuminated using a red color to indicate rejection of the swiped fingerprint. In another embodiment, a fingerprint sensor is illuminated by flashing one or more light sources (e.g., flashing the light source(s) On and Off at a particular frequency) when the fingerprint sensor is waiting for a user to apply their finger to the fingerprint sensor. The flashing of the light source(s) attracts the user's attention to the fingerprint sensor and indicates that the user needs to take action (e.g., swiping their finger across the fingerprint sensor). In other embodiments, the fingerprint sensor is illuminated in a manner that is aesthetically pleasing to the user. For example, the fingerprint sensor may be illuminated with a color that matches a color associated with the device (or device housing) in which the fingerprint sensor is installed. Other embodiments use different colors, flashing patterns, or other illumination characteristics to indicate whether a user swiped their finger across the fingerprint sensor too quickly or too slowly.

In a particular embodiment, one or more light sources flash at a predetermined rate and duty cycle when waiting for a user to apply their finger to the fingerprint sensor. If the finger swipe is successful and a match is detected, one of the two light sources is illuminated for a predetermined time to indicate a successful match. If the finger swipe is not successful or a match is not detected, a different one of the light sources is illuminated for a predetermined time to indicate a failed swipe or failed match. The duty cycle identifies the percentage of time that a light source will be illuminated. For example, if a flashing (or toggle) rate is 500 ms and a duty cycle is 10, the light source will be ON for 50 ms and OFF for 450 ms.

Other embodiments of the illuminated fingerprint sensor use the illumination format to provide diagnostic feedback to a user or a technician. For example, at the time of manufacture, the illumination format can indicate whether the fingerprint sensor passed production testing. Alternatively, the illumination format can indicate the results of a diagnostic test performed on the fingerprint sensor by a user based on instructions received from a technician or customer service representative. Other examples utilize the illumination format to provide diagnostic feedback to the user, such as passing a fingerprint sensor self-test or identifying a particular problem associated with the fingerprint sensor. Another embodiment where multiple fingerprint sensors are utilized, a particular illumination format can identify one or more of the multiple fingerprint sensors.

As discussed herein, the illuminated fingerprint sensor may use different illumination formats based on the current status of the fingerprint sensor. In particular embodiments, the current status of the fingerprint sensor may indicate an operating mode associated with the fingerprint sensor and/or the device in which the fingerprint sensor is installed. For example, specific illumination formats can indicate a standby mode, a "power ON" mode, a low battery mode, or an error mode associated with the fingerprint sensor or the device in which the fingerprint sensor is installed. In other examples, an illumination format indicates a mode of operation of the fingerprint sensor, such as operating in a fingerprint sensing mode, a navigation mode, or a slider/scroll mode. When operating in a fingerprint sensing mode, the fingerprint sensor senses a user's fingerprint characteristics when swiped across or placed upon the fingerprint sensor. When operating in a navigation mode, the fingerprint sensor receives movement information associated with movement of the user's finger. This finger movement is used to "navigate" in one or two dimensions. This "navigation" of the user's finger on the fingerprint sensor generates a corresponding movement of a cursor or other device on a display screen or other display mechanism contained in the device in which the fingerprint sensor is installed.

When operating in a "slider/scroll mode", the fingerprint sensor receives movement information associated with movement of the user's finger. This finger movement is used to move a "slider bar" or similar mechanism in a display device. The slider bar can control the subset of data displayed at a particular time, control device settings such as volume or brightness, zoom in or zoom out for a displayed image, or pan across a displayed image. Alternatively, the finger movement may control a scrolling operation that allows the user to scroll through a list of data, such as a list of names, a list of available options, a list of phone numbers, or a list of device settings. Finger movement that controls a slider bar and/or a scroll feature can be horizontal finger movement, vertical finger movement, or any other directional finger movement.

Although particular embodiments discussed herein describe the use of colors or flashing lights to provide feedback to a user of a device, in alternate embodiments both colors and flashing lights can be used simultaneously. For example, a flashing red light may indicate a malfunctioning fingerprint sensor or may indicate that an unauthorized fingerprint was applied to the fingerprint sensor.

Embodiments of the system and method described herein facilitate illumination of a fingerprint sensor. Additionally, some embodiments may be used in conjunction with one or more conventional fingerprint sensing systems and methods. For example, one embodiment may be used as an improvement of existing fingerprint detection and/or sensing systems.

Although the components and modules illustrated herein are shown and described in a particular arrangement, the arrangement of components and modules may be altered to illuminate a fingerprint sensor in a different manner. In other embodiments, one or more additional components or modules may be added to the described systems, and one or more components or modules may be removed from the described systems. Alternate embodiments may combine two or more of the described components or modules into a single component or module.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. An apparatus comprising:
a fingerprint sensor; and
a light source proximate the fingerprint sensor, wherein the light source is configured to provide a plurality of illumination formats, each of the plurality of illumination formats being associated with an operating status of the fingerprint sensor, and wherein the light source is positioned to emit light through the fingerprint sensor.

2. The apparatus of claim 1, wherein the plurality of illumination formats include a first format associated with a first illumination color and a second format associated with a second illumination color; or
wherein the plurality of illumination formats include a first format associated with a flashing frequency for activating and deactivating the light source, and a second format associated with a constant activation of the light source.

3. The apparatus of claim 1 or 2, wherein the fingerprint sensor has a first surface that is configured to be contacted by a finger and a second surface opposite the first surface, and wherein the light source is positioned to project light against the second surface; and/or
wherein the fingerprint sensor is substantially transparent to light emitted from the light source.

4. The apparatus of one of claims 1 to 3, wherein the operating status of the fingerprint detector includes awaiting application of a finger to the fingerprint sensor; and/or
wherein the operating status of the fingerprint detector includes indicating an authenticated fingerprint; and/or
wherein the operating status of the fingerprint detector includes indicating an invalid fingerprint; and/or
wherein the operating status of the fingerprint detector includes indicating an improper fingerprint swipe speed; and/or
wherein the operating status of the fingerprint detector includes indicating a navigation mode of operation; and/or
wherein the operating status of the fingerprint detector includes indicating a scrolling mode of operation.

5. The apparatus of one of claims 1 to 4, wherein the fingerprint sensor includes conductive lines that are semi-transparent to light; and/or
wherein the fingerprint sensor includes a substrate that is at least partially transparent to light.

6. A fingerprint sensing apparatus comprising:
a rigid substrate including a light source disposed thereon, wherein the light source is configured to emit light outwardly from the rigid substrate and configured to provide a plurality of illumination formats associated with a plurality of operating statuses associated with the fingerprint sensing apparatus; and
a flexible substrate including an image sensor disposed thereon, the flexible substrate being substantially transparent to light emitted from the light source, wherein the flexible substrate is positioned proximate the rigid substrate such that light emitted from the light source projects through the flexible substrate.

7. The fingerprint sensing apparatus of claim 6, wherein the flexible substrate is bonded to the rigid substrate; and/or
wherein the flexible substrate further includes an image sensing module disposed thereon, wherein the image sensing module is coupled to the image sensor.

8. The apparatus of one of claims 1 to 5, or the fingerprint sensing apparatus of claim 6 or 7, wherein the light source is a light emitting diode and preferably a multi-color light emitting diode.

9. The fingerprint sensing apparatus of one of claims 6 to 8, wherein the plurality of illumination formats include a first format associated with a first illumination color and a second format associated with a second illumination color; and/or
wherein the plurality of illumination formats include a first format associated with a flashing frequency for activating and deactivating the light source, and a second format associated with a constant activation of the light source.

10. A method of illuminating a fingerprint sensor, the method comprising:
identifying a current status associated with the fingerprint sensor;
determining an illumination format associated with the current status; and
illuminating the fingerprint sensor based on the illumination format.

11. The method of claim 10, wherein the illumination format identifies a particular illumination color; and/or
wherein the illumination format identifies a particular frequency with which a light source is activated and deactivated.

12. The method of claim 10 or 11, wherein the fingerprint sensor includes a plurality of light sources and the illumination format identifies at least one of the plurality of light sources to illuminate; and/or
wherein the fingerprint sensor includes a plurality of light sources and the illumination format identifies a pattern for activating and deactivating the plurality of light sources.

13. An apparatus comprising:
a fingerprint sensor;
a first light source proximate the fingerprint sensor and configured to provide a plurality of illumination formats; and
a second light source positioned to emit light through the fingerprint sensor.

14. The apparatus of claim13, wherein the first light source is a light emitting diode; and/or
wherein each of the plurality of illumination formats is associated with an operating status of the fingerprint sensor; and/or
wherein the second light source is configured to provide the plurality of illumination formats associated with the first light source; and/or
wherein the second light source is configured to provide a second plurality of illumination formats.

15. The apparatus of claim 13 or 14, wherein the fingerprint sensor is substantially transparent to light; and/or
wherein the fingerprint sensor includes conductive lines that are at least partially transparent to light; and/or
wherein the fingerprint sensor includes a substrate that is at least partially transparent to light.
